# EUROPEAN PATENT SPECIFICATION

(11) **EP 3 159 480 B1**
(45) Date of publication and mention of the grant of the patent: **31.07.2019**
(21) Application number: 16189641.0
(22) Date of filing: 20.09.2016
(51) Int. Cl.: F01D 11/00, F01D 11/02, F01D 5/08, F02C 3/04, F04D 29/08, F04D 29/32, F01D 5/02

(54) **ROTOR SEAL AND ROTOR THRUST BALANCE CONTROL**
ROTORDICHTUNG UND ROTORSCHUBAUSGLEICHSKONTROLLE
JOINT D'ÉTANCHÉITÉ DE ROTOR ET COMMANDE D'ÉQUILIBRAGE DE POUSSÉE DE ROTOR

(30) Priority: 19.10.2015 US 201514887013
(43) Date of publication of application: 26.04.2017
(73) Proprietor: United Technologies Corporation, Farmington, CT 06032 (US)
(72) Inventor: GLAHN, Jorn A., Manchester, CT Connecticut 06042 (US); SCHWARZ, Frederick M., Glastonbury, CT Connecticut 06033 (US)
(74) Representative: Dehns

(56) References cited:
- EP-A1- 0 833 039
- EP-A2- 1 890 005
- US-A1- 2007 007 730
- US-A1- 2013 195 627
- US-A1- 2013 323 010

## Description

### BACKGROUND

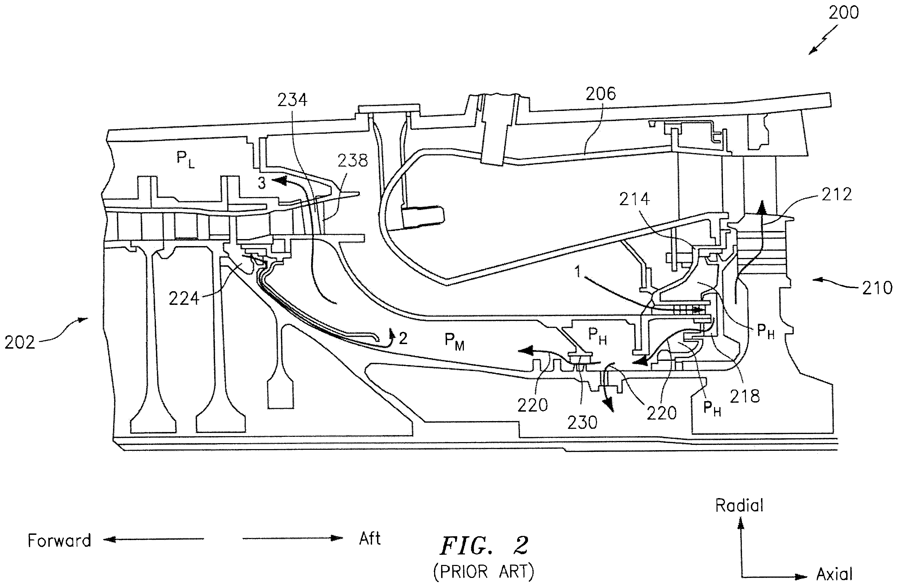

Referring to FIG. 2, a gas turbine engine 200 generally includes a compressor section 202 to pressurize an airflow, a combustor section 206 to burn a hydrocarbon fuel in the presence of the pressurized air, and a turbine section 210 to extract energy from the resultant combustion gases.

At least a portion of the airflow that is output from the compressor section 202 may be injected onto a portion of a rotor associated with the turbine section 210 as shown via arrow 1 in FIG. 2. The injection may occur via a tangential on-board injection (TOBI) vane into a cavity of high pressure (P_{H}) upstream of a disk of the turbine section 210. The majority of the airflow 1 feeds cooling passages between a coverplate and disk of the turbine section 210, eventually leading to turbine blade cooling as denoted at 212. As one skilled in the art will appreciate, the TOBI may be used to impart an angle to cooling air so that the cooling air can more easily enter cooling holes on structure (e.g., a rotating disk). Instead of hitting the structure perpendicularly, the cooling air may hit the structure at an angle/tangentially.

A portion of the blade airflow supply, however, leaks out at an outer diameter labyrinth seal 214 and an inner diameter labyrinth seal 218 into other cavities. This leakage (at least partially denoted by arrows 220) represents a parasitic loss and limits the pressure that can be built up towards the forward end of the turbine section 210.

The leakage 220 may cause a seal 224 on the rear of the compressor section 202 to be located at a relatively large radius (measured relative to an axial centerline of the engine 200), such that additional stress may be imposed on a disk of the compressor section 202. Moreover, the leakage 220 may require additional amounts of airflow 1 to be provided to compensate for the loss associated with the leakage 220.

One or more of the engine sections, such as the compressor section 202 and the turbine section 210, are typically supported by one or more bearings. During engine 200 operation (e.g., during take-off of an associated aircraft), the compressor section 202 may be urged in a generally axial forward direction at a first load value, whereas the turbine section 210 may be urged in a generally axial aft direction at a second load value. The difference between the first and second load values may exceed the capacity of the bearing. To compensate for this difference, a portion of the air flow/streams in the engine 200 (denoted by arrow 3) is exhausted via a vent 234 incorporated in a pre-diffuser 238 to a low pressure environment (P_{L}) in order balance the loads. The exhausting of the flow through the vent 234 represents additional loss.

The cavities that receive the leakage 220 are at high pressure (P_{H}). Additional seals 230 may be incorporated in an effort to combat the impact of the leakage 220 or to adjust pressure levels. However, ventilation and thrust balance air (shown via arrow number 2 in FIG. 2) is typically discharged at a relative medium pressure (P_{M}) that is too low to overcome the high pressure P_{H}.

US 2013/323010 A1 discloses features of the preamble of claim 1.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to an engine of an aircraft as claimed in claim 1.

In some embodiments, the engine further comprises a third seal located at an aft end of a compressor section of the engine. In some embodiments, the third seal is a floating, non-contact seal. In some embodiments, a location of the third seal is based on a first load experienced by the turbine section and a second load experienced by the compressor section. In some embodiments, the location of the third seal is based on a capacity of at least one bearing that supports the turbine section and the compressor section. In some embodiments, the location of the third seal is approximately 60% of an inner diameter exit flowpath radius of the engine.

In some embodiments, the engine further comprises at least one
passage configured to route an airflow to provide rim sealing with respect to combustion gases output by the combustor section.

In some embodiments, the first seal is located between a tangential on-board injection (TOBI) inner diameter radius and a radius of the disk of the turbine section. In some embodiments, the second seal is located between the TOBI inner diameter radius and a radius of an outer surface of a shaft connection to a compressor section of the engine. In some embodiments, the engine further comprises a third seal located between a gaspath of the compressor section and a rear hub of the compressor section. In some embodiments, the third seal is a floating, non-contact seal. In some embodiments, the third seal is a labyrinth seal. In some embodiments, the third seal is located proximate the radius of the outer surface of the shaft connection to the compressor section. In some embodiments, a location of the third seal is based on a first load experienced by the turbine section and a second load experienced by the compressor section. In some embodiments, the location of the third seal is based on a capacity of at least one bearing that supports the turbine section and the compressor section.

### BRIEF DESCRIPTION OF THE DRAWINGS

The present disclosure is illustrated by way of example and not limited in the accompanying figures in which like reference numerals indicate similar elements.
FIG. 1 is a side cutaway illustration of a geared turbine engine.
FIG. 2 illustrates a portion of an exemplary engine in accordance with the prior art.
FIG. 3 illustrates a portion of an engine in accordance with aspects of this disclosure.
FIG. 4 illustrates a portion of an engine in accordance with aspects of this disclosure.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

In accordance with various aspects of the disclosure, apparatuses, systems and methods are described for providing one or more seals in connection with an engine. In some embodiments, the seal may include at least some characteristics that are common with a HALO® seal provided by, e.g., Advanced Technologies Group, Inc. of Stuart, Florida. Such characteristics may include the provisioning of one or more floating, non-contact seals. In some embodiments, the seals may be used to control one or more airflows in the engine. For example, the seals may be used to obtain a thrust balance between one or more sections of the engine. The control of the airflow in accordance with aspects of this disclosure may enable an increase in component lifetimes.

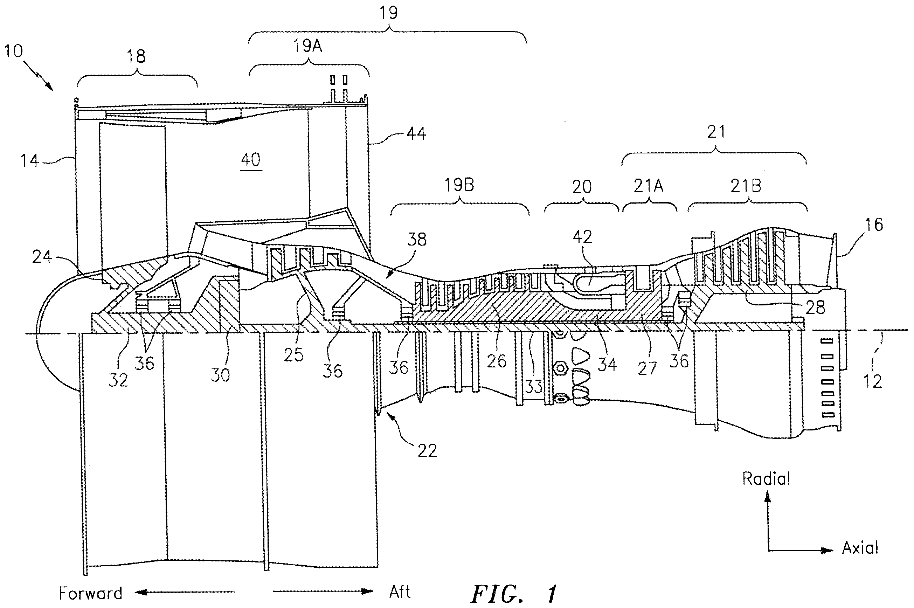

Aspects of the disclosure may be applied in connection with a gas turbine engine. FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. Each of the engine sections 18-19B, 21A and 21B includes a respective rotor 24-28. Each of these rotors 24-28 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 24 is connected to a gear train 30, for example, through a fan shaft 32. The gear train 30 and the LPC rotor 25 are connected to and driven by the LPT rotor 28 through a low speed shaft 33. The HPC rotor 26 is connected to and driven by the HPT rotor 27 through a high speed shaft 34. The shafts 32-34 (e.g., outer surfaces of the shafts) are rotatably supported by a plurality of bearings 36; e.g., rolling element and/or thrust bearings. Each of these bearings 36 is connected to the engine housing 22 by at least one stationary structure such as, for example, an annular support strut.

During operation, air enters the turbine engine 10 through the airflow inlet 14, and is directed through the fan section 18 and into a core gas path 38 and a bypass gas path 40. The air within the core gas path 38 may be referred to as "core air". The air within the bypass gas path 40 may be referred to as "bypass air". The core air is directed through the engine sections 19-21, and exits the turbine engine 10 through the airflow exhaust 16 to provide forward engine thrust. Within the combustor section 20, fuel is injected into a combustion chamber 42 and mixed with compressed core air. This fuel-core air mixture is ignited to power the turbine engine 10. The bypass air is directed through the bypass gas path 40 and out of the turbine engine 10 through a bypass nozzle 44 to provide additional forward engine thrust. This additional forward engine thrust may account for a majority (e.g., more than 70 percent) of total engine thrust. Alternatively, at least some of the bypass air may be directed out of the turbine engine 10 through a thrust reverser to provide reverse engine thrust.

FIG. 1 represents one possible configuration for an engine 10. Aspects of the disclosure may be applied in connection with other environments, including additional configurations for an engine of an aircraft (e.g., an airplane, a helicopter, etc.).

In accordance with aspects of this disclosure, a seal may be used for purposes of isolation (e.g., fluid isolation) between two or more interfaces. For example, a seal may be used in connection with one or more of the devices/components associated with the engine 10. Such devices/components may include, or be associated with, the compressor section 19, the turbine section 21, etc. In some embodiments, a seal may be incorporated between a first structure and a second structure.

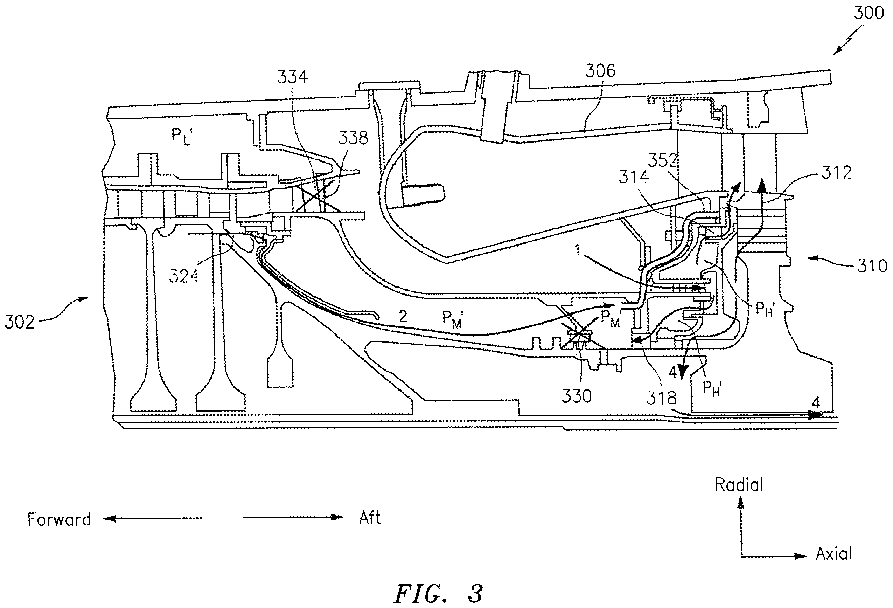

Referring to FIG. 3, a portion of an engine 300 is shown. The engine 300 may correspond to the engine 10 of FIG. 1. The engine 300 incorporates many of the same sections and components as the engine 200 described above, and so, a complete redescription is omitted herein for the sake of brevity. Briefly, the engine 300 is shown as including a compressor section 302, a combustor section 306, a turbine section 310, and a pre-diffuser 338.

As shown in FIG. 3, the airflow 1 is used for cooling one or more portions of the turbine section 310; e.g., turbine blade cooling as reflected via 312. Whereas the engine 200 used labyrinth seals at the TOBI outer diameter 214 and inner diameter 218 locations, the engine 300 is shown as incorporating floating, non-contact seals at the TOBI outer diameter 314 and the inner diameter 318 locations. The seal 314 may be located between a TOBI inner diameter radius and a dead rim radius of a disk of the turbine section 310. The seal 318 may be located between a TOBI outlet's inner diameter radius and a minimum radius of an outer surface of a shaft connection to the compressor section 302.

Relative to the engine 200, the use of the floating, non-contact seals 314 and 318 at the indicated locations may increase the pressure in front of disk at the forward end of the turbine section 310 (e.g., in the cavities denoted by P_{H}').

The increase in pressure at P_{H}' in the engine 300 (relative to the cavity pressure P_{H} in the engine 200) may enable a seal 324 to be located more radially inward/inboard (e.g., closer to the axial centerline of the engine 300) relative to the counterpart seal 224 of the engine 200. This movement of the seal 324 radially inward may extend the lifetime of the (aft-most) disk of the compressor section 312 by decreasing the thermal or structural fight that may be experienced by the disk. Illustratively, the movement may be expressed as moving from a location of approximately 95% of an inner diameter (ID) exit flowpath radius to approximately 60% of the ID exit flowpath radius.

The seal 324 may be a labyrinth seal. The seal 324 may be located at the aft end of the compressor section 302.

The pressure in the forward direction from the seal 318 (e.g., in the cavities denoted as P_{M}') may be lower than the counterpart pressures P_{M} of the engine 200. As such, reference character 330 (along with the corresponding 'X') denotes the potential absence of a seal at the corresponding location in the diffuser case. This may be contrasted with the inclusion of the diffuser case mounted thrust balance seal 230 in the engine 200. The absence of the seal at 330 (e.g., the seal-free location 330) may be based at least in part on a reduction in leakage (compared with the extensive leakage 220 in the engine 200) based on the use of the floating, non-contact seals 314 and 318.

The reduction in pressure in the forward direction from the seal 318 may also enable the portion of the thrust balance vent air (denoted by arrow 2 in FIG. 3) to be routed aft from where it can be routed via cored passages to provide a rim sealing capability as denoted via 352. The rim sealing capability as provided at 352 may be used to prevent/minimize a backflow of hot air/combustion gases from the combustor section 306. As reflected via the reference character 334 (along with the corresponding 'X'), this routing of the airflow 2 in FIG. 3 may enable the elimination of the counterpart vent/vent passage 224 that is present in the engine 200. In other words, and in accordance with the invention, the pre-diffuser 338 is vent-free at the location 334 (e.g., the counterpart to the location 224 of the engine 200).

The lack of a vent at 334 and corresponding vent airflow 3 in the engine 300 may enable the cavity denoted by low-pressure P_{L}' to be at a lower temperature than the counterpart low-pressure cavity P_{L} in the engine 200. This lower temperature may help to extend the lifetime of the components in/around the low-pressure cavity P_{L}'.

In FIG. 3, the arrows labeled as 4 may represent a feeding of cavity air/airflow from P_{H}' to a disk of the turbine section 310. Such movement of the airflow 4 may be facilitated by a jumper arrangement through a TOBI feed manifold.

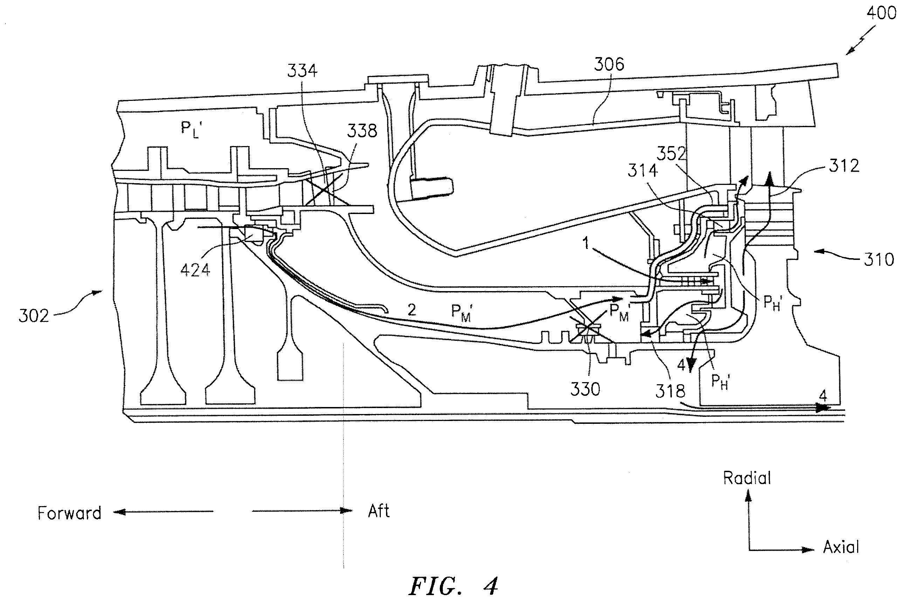

Referring to FIG. 4, a portion of an engine 400 is shown. The engine 400 may correspond to the engine 10 of FIG. 1. The engine 400 incorporates many of the same sections and components as the engine 300 described above, and so, a complete redescription is omitted herein for the sake of brevity.

Whereas the engine 300 was shown in FIG. 3 as including two floating, non-contact seals 314 and 318, the engine 400 may include three floating, non-contact seals (e.g., seals 314, 318, and 424). The seal 424 may be located between a gaspath associated with the compressor section 302 and a rear/aft hub of the compressor section 302. The location of the seal 424 may be determined based on thrust balance/load requirements (e.g., based on the loading/tendency of the compressor section 302 to move forward and the turbine section 310 to move aft, relative to the difference in loads and the capacity of a bearing to accommodate such differential loads). The location of the seal 424 may be based on a radius of an outer surface of a shaft connection to the compressor section 302.

Technical effects and benefits of the disclosure include a sealing arrangement that is used in an engine of an aircraft to obtain a reduction in leakage at one or more locations of the engine. Moreover, the sealing arrangement may enable one or more air streams of the engine to be routed in a more efficient manner relative to conventional engine platforms.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure.

## Claims

1. An engine (300; 400), comprising:
a turbine section (310) that includes
a disk rotatable about an engine axial centerline;
a first seal (314) located forward of the disk; and
a second seal (318) located forward of the disk of the turbine section (310) and radially inward of the first seal (314) relative to an axial centerline of the engine (300; 400),
wherein the first (314) and second (318) seals are floating, non-contact seals and are configured to seal a high pressure cavity (P_{H}') upstream of the disc, wherein the second seal (318) separates medium pressure cavities (P_{M}') from the high pressure cavity (P_{H}'), the medium pressure cavities (P_{M}') being forward of the high pressure cavity (P_{H}'),
**characterised in that** the engine further comprises:
a combustor section (306) that includes a pre-diffuser (338) that separates the medium pressure cavities (P_{M}') from a low-pressure cavity (P_{L}'), and no vent for exhausting a portion of the air flow in the medium pressure cavities (P_{M}') to the low-pressure cavity (P_{L}') is incorporated in the pre-diffusor (338); and
at least one passage (352) configured to route an airflow from the medium pressure cavities (P_{M}') to provide rim sealing with respect to combustion gases output by the combustor section (306).

2. The engine of claim 1, wherein the first seal (314) is located between a tangential on-board injection (TOBI) inner diameter radius and a radius of the disk of the turbine section (310).

3. The engine of claim 2, wherein the second seal (318) is located between the TOBI inner diameter radius and a radius of an outer surface of a shaft connection to a compressor section (302) of the engine.

4. The engine of claim 1, 2 or 3, further comprising:
a third seal (424) located between a gaspath of a or the compressor section (302) and a rear hub of the compressor section (302).

5. The engine of claim 4, wherein the third seal (424) is a floating, non-contact seal.

6. The engine of claim 4 or 5, wherein the third seal (424) is a labyrinth seal.

7. The engine of claim 4, 5 or 6, wherein the third seal (424) is located proximate the radius of the outer surface of the shaft connection to the compressor section (302).

8. The engine of any of claims 4 to 7, wherein a location of the third seal (424) is based on a first load experienced by the turbine section (310) and a second load experienced by the compressor section (302).

9. The engine of claim 1, 2 or 3, further comprising:
a third seal (324) located at an aft end of a or the compressor section (302) of the engine (300).

10. The engine of claim 9, wherein the third seal (324) is a floating, non-contact seal.

11. The engine of claim 9 or 10, wherein a location of the third seal (324) is based on a first load experienced by the turbine section (310) and a second load experienced by the compressor section (302).

12. The engine of claim 9, 10 or 11, wherein the location of the third seal (324) is approximately 60% of an inner diameter exit flowpath radius of the engine (300).

13. The engine of any of claims 4 to 12, wherein the location of the third seal (324) is based on a capacity of at least one bearing that supports the turbine section (310) and the compressor section (302).

14. The engine of any preceding claim, wherein discharge air from a or the compressor section (302) is routed to the disk of the turbine section (310).

## Patentansprüche

1. Triebwerk (300; 400), umfassend:
einen Turbinenabschnitt (310), der Folgendes beinhaltet:
eine Scheibe, die um eine axiale Triebwerksmittellinie gedreht werden kann;
eine erste Dichtung (314), die sich vor der Scheibe befindet; und
eine zweite Dichtung (318), die sich vor der Scheibe des Turbinenabschnitts (310) und bezogen auf eine axiale Mittellinie des Triebwerks (300; 400) von der ersten Dichtung (314) radial nach innen befindet,
wobei es sich bei der ersten (314) und zweiten (318) Dichtung um berührungslose Gleitflächendichtungen handelt, die konfiguriert sind, um einen unter hohem Druck stehenden Hohlraum (P_{H}') stromaufwärts der Scheibe abzudichten, wobei die zweite Dichtung (318) unter mittlerem Druck stehende Hohlräume (P_{M}') von dem unter hohem Druck stehenden Hohlraum (P_{H}') trennt, wobei die unter mittlerem Druck stehenden Hohlräume (P_{M}') vor dem unter hohem Druck stehenden Hohlraum (P_{H}') liegen,
**dadurch gekennzeichnet, dass** das Triebwerk ferner Folgendes umfasst:
einen Brennkammerabschnitt (306), der einen Vor-Diffusor (338) beinhaltet, der die unter mittlerem Druck stehenden Hohlräume (P_{M}') von einem unter niedrigen Druck stehenden Hohlraum (P_{L}') trennt, und wobei kein Entlüfter zum Ablassen eines Teils des Luftstroms in den unter mittlerem Druck stehenden Hohlräumen (P_{M}') in den unter niedrigem Druck stehenden Hohlraum (P_{L}') in den Vor-Diffusor (338) eingeschlossen ist, und
zumindest einen Durchgang (352), der konfiguriert ist, um einen Luftstrom von den unter mittlerem Druck stehenden Hohlräumen (P_{M}') zu leiten, um eine Randabdichtung in Bezug auf Verbrennungsgase bereitzustellen, die durch den Brennkammerabschnitt (306) ausgegeben werden.

2. Triebwerk nach Anspruch 1, wobei sich die erste Dichtung (314) zwischen einem Inndendurchmesserradius einer tangentialen bordseitigen Einspritzung (tangential on-board injection - TOBI) und einem Radius der Scheibe des Turbinenabschnitts (310) befindet.

3. Triebwerk nach Anspruch 2, wobei sich die zweite Dichtung (318) zwischen dem Inndendurchmesserradius der TOBI und einem Radius einer Außenfläche einer Wellenverbindung mit einem Verdichterabschnitt (302) des Triebwerks befindet.

4. Triebwerk nach Anspruch 1, 2 oder 3, ferner umfassend:
eine dritte Dichtung (424), die sich zwischen einem Gasweg eines oder des Verdichterabschnitts (302) und einer hinteren Nabe des Verdichterabschnitts (302) befindet.

5. Triebwerk nach Anspruch 4, wobei die dritte Dichtung (424) eine berührungslose Gleitflächendichtung ist.

6. Triebwerk nach Anspruch 4 oder 5, wobei die dritte Dichtung (424) eine Labyrinthdichtung ist.

7. Triebwerk nach Anspruch 4, 5 oder 6, wobei sich die dritte Dichtung (424) nahe dem Radius der Außenfläche der Wellenverbindung mit dem Verdichterabschnitt (302) befindet.

8. Triebwerk nach einem der Ansprüche 4 bis 7, wobei eine Lage der dritten Dichtung (424) auf einer ersten Last, die durch den Turbinenabschnitt (310) erfahren wird, und einer zweiten Last basiert, die durch den Verdichterabschnitt (302) erfahren wird.

9. Triebwerk nach Anspruch 1, 2 oder 3, ferner umfassend:
eine dritte Dichtung (324), die sich an einem hinteren Ende eines oder des Verdichterabschnitts (302) des Triebwerks (300) befindet.

10. Triebwerk nach Anspruch 9, wobei die dritte Dichtung (324) eine berührungslose Gleitflächendichtung ist.

11. Triebwerk nach Anspruch 9 oder 10, wobei eine Lage der dritten Dichtung (324) auf einer ersten Last, die durch den Turbinenabschnitt (310) erfahren wird, und einer zweiten Last basiert, die von dem Verdichterabschnitt (302) erfahren wird.

12. Triebwerk nach Anspruch 9, 10 oder 11, wobei die Lage der dritten Dichtung (324) etwa an 60 % eines Innendurchmesser-Austrittsströmungspfadradius des Triebwerks (300) ist.

13. Triebwerk nach einem der Ansprüche 4 bis 12, wobei die Lage der dritten Dichtung (324) auf einer Kapazität von zumindest einem Lager basiert, das den Turbinenabschnitt (310) und den Verdichterabschnitt (302) stützt.

14. Triebwerk nach einem der vorangehenden Ansprüche, wobei eine Abluft von einem oder dem Verdichterabschnitt (302) zu der Scheibe des Turbinenabschnitts (310) geleitet wird.

## Revendications

1. Moteur (300 ; 400), comprenant :
une section de turbine (310) qui comprend :
un disque pouvant tourner autour d'une ligne centrale axiale du moteur ;
un premier joint d'étanchéité (314) situé en avant du disque ; et
un deuxième joint d'étanchéité (318) situé en avant du disque de la section de turbine (310) et radialement vers l'intérieur du premier joint d'étanchéité (314) par rapport à une ligne centrale axiale du moteur (300 ; 400), dans lequel les premier (314) et deuxième (318) joints d'étanchéité sont des joints d'étanchéité flottants sans contact et sont configurés pour boucher une cavité haute pression (P_{H}') en amont du disque, dans lequel le deuxième joint d'étanchéité (318) sépare les cavités moyenne pression (P_{M}') de la cavité haute pression (P_{H}'), les cavités moyenne pression (P_{M}') étant en avant de la cavité haute pression (P_{H}'),
**caractérisé en ce que** le moteur comprend en outre :
une section de chambre de combustion (306) comprenant un pré-diffuseur (338) qui sépare les cavités moyenne pression (P_{M}') d'une cavité basse pression (P_{L}') et aucun évent pour évacuer une partie du flux d'air dans les cavités moyenne pression (P_{M}') jusqu'à la cavité basse pression (P_{L}') n'est incorporé dans le pré-diffuseur (338) ; et
au moins un passage (352) configuré pour acheminer un flux d'air provenant des cavités moyenne pression (P_{M}') afin d'assurer l'étanchéité à rebord par rapport aux gaz de combustion délivrés par la section de chambre de combustion (306) .

2. Moteur selon la revendication 1, dans lequel le premier joint d'étanchéité (314) est situé entre un rayon de diamètre intérieur d'injection tangentielle de bord (TOBI) et un rayon du disque de la section de turbine (310).

3. Moteur selon la revendication 2, dans lequel le deuxième joint d'étanchéité (318) est situé entre le rayon de diamètre intérieur TOBI et un rayon d'une surface extérieure d'une liaison d'arbre avec une section de compresseur (302) du moteur.

4. Moteur selon la revendication 1, 2 ou 3, comprenant en outre :
un troisième joint d'étanchéité (424) situé entre un passage de gaz d'une ou de la section de compresseur (302) et un moyeu arrière de la section de compresseur (302).

5. Moteur selon la revendication 4, dans lequel le troisième joint d'étanchéité (424) est un joint d'étanchéité flottant sans contact.

6. Moteur selon la revendication 4 ou 5, dans lequel le troisième joint d'étanchéité (424) est un joint d'étanchéité à labyrinthe.

7. Moteur selon la revendication 4, 5 ou 6, dans lequel le troisième joint d'étanchéité (424) est situé à proximité du rayon de la surface extérieure de la liaison d'arbre avec la section de compresseur (302).

8. Moteur selon l'une quelconque des revendications 4 à 7, dans lequel un emplacement du troisième joint d'étanchéité (424) est basé sur une première charge subie par la section de turbine (310) et une seconde charge subie par la section de compresseur (302).

9. Moteur selon la revendication 1, 2 ou 3, comprenant en outre :
un troisième joint d'étanchéité (324) situé au niveau d'une extrémité arrière d'une ou de la section de compresseur (302) du moteur (300).

10. Moteur selon la revendication 9, dans lequel le troisième joint d'étanchéité (324) est un joint d'étanchéité flottant sans contact.

11. Moteur selon la revendication 9 à 10, dans lequel un emplacement du troisième joint d'étanchéité (324) est basé sur une première charge subie par la section de turbine (310) et une seconde charge subie par la section de compresseur (302).

12. Moteur selon la revendication 9, 10 ou 11, dans lequel l'emplacement du troisième joint d'étanchéité (324) est à environ 60 % d'un rayon de trajet d'écoulement de sortie de diamètre intérieur du moteur (300).

13. Moteur selon l'une quelconque des revendications 4 à 12, dans lequel l'emplacement du troisième joint d'étanchéité (324) est basé sur une capacité d'au moins un palier qui soutient la section de turbine (310) et la section de compresseur (302).

14. Moteur selon une quelconque revendication précédente, dans lequel l'air de décharge d'une ou de la section de compresseur (302) est acheminé vers le disque de la section de turbine (310).
